# EUROPEAN PATENT APPLICATION

(11) **EP 3 109 836 A1**
(43) Date of publication of application: **28.12.2016**
(21) Application number: 16158858.7
(22) Date of filing: 07.03.2016
(51) Int. Cl.: G07C 9/00, F16P 3/08, F16P 3/14

(54) **ELECTRONIC TRAPPED KEYS**

(30) Priority: 22.06.2015 US 201562182891 P
(71) Applicant: Rockwell Automation Technologies, Inc., Mayfield Heights, OH 44124 (US)
(72) Inventor: DOW, Michele M., Ashburnham, MA Massachusetts 01430 (US); GALERA, Richard, Nashua, NH New Hampshire 03062 (US); SHEA, Roberta Nelson, Westford, MA Massachusetts 01886 (US)
(74) Representative: Grünecker Patent- und Rechtsanwälte PartG mbB

(57) **Abstract**

The present disclosure describes a system for the integration of trapped key interlock devices into an industrial control system through the use of an electronic trapped key system that integrates the management of state and permissions of trapped keys with their associated mechanical operators in addition to functional safety controllers.

## Description

### BACKGROUND

The invention relates generally to trapped key interlock apparatus as are used in applications where it is essential to ensure that a predetermined sequence of events has occurred prior to the entry of humans into an area. Trapped key interlocks consist of a mechanism whereby a mechanical key is locked or trapped in a mechanical device until some action occurs, for example the disconnection of power, at which time the trapped key is released and removed from a first device for transport by a person to another device where the trapped key is used to perform a successive operation. Trapped key interlock devices can require multiple keys and operations in sequence in order ensure that proper safety procedures have been followed prior to the access of areas and machines that may present a hazard to humans or to the process as performing actions out of sequence may damage the process or the products in production, in addition to human safety.

The application of trapped keys may also include sequencing providing for the operation of machinery under pre-determined conditions such as only allowing a portion of a machine to operate, allowing a machine to operate at reduced speed or torque, as well as time or cycle limitations.

While many trapped key devices are primarily mechanical some may include an electronic component to introduce a timed delay between steps in the sequence. Others may include field inputs from sensors on or near a machine that prevent proceeding to the next step in a sequence until hazards have been controlled, for example all motion associated with a machine has stopped.

Rockwell Automation, for example, provides a Guardmaster® 442G Multifunctional Access Box, that is an integrated access control and guard locking device. This system consists of a handle assembly and a lock module that allows for two integrated hasps to affix padlocks on the handle assembly. However, this Access Box does not provide trapped key interfacing, state information, logging functionality and the other features and improvements as described herein.

With the primary goal of trapped key devices being to enhance the safety of the operation of a machine or group of machines enhancing the art by combining trapped key functionality with lockout and tagout abilities in addition to providing state information and logging for these devices to other devices in the overall industrial control system like programmable logic controllers (PLC) is desirable. Additional improvements in the art may include an electronic key and associated components that provide additional enhancements in safety for these applications.

### BRIEF DESCRIPTION

A trapped key interlock system comprising a trapped key interface device connected to an access control module that controls permissions for the operation of a latching mechanism used to control access to hazardous areas in industrial applications. The access control module has a communication interface to the industrial control system for the exchange of information.

### DRAWINGS

These and other features, aspects, and advantages of the present invention will become better understood when the following detailed description is read with reference to the accompanying drawings in which like characters represent like parts throughout the drawings, wherein:
FIG. 1 is a perspective drawing of a perimeter guard enclosure surrounding an industrial robot;
FIG. 2A is a block drawing of the function of a trapped key interlock apparatus depicting the presence of the trapped key enabling the electrical power disconnect device and an access panel on a machine powered by the electrical power disconnect device that the same trapped key is used to unlock;
FIG. 2B is a block drawing of the function of a trapped key interlock apparatus depicting the electrical power disconnect device disabled and the trapped key removed and used to unlock the access door to the machine that was powered by the electrical power disconnect;
FIG. 3 is a perspective drawing of a mechanical trapped key interlock apparatus;
FIG. 4 is a block diagram representation of a trapped key apparatus with presence and position sensing in addition to a communications interface;
FIG. 5 is a block diagram of an embodiment of the electronic mechanism to facilitate the sensing and communications of a trapped key apparatus;
FIG. 6 is a block diagram of a programmable logic controller (PLC) system;
FIG. 7 is a diagram depicting a detail view of a mechanical embodiment of the locking device for the door of the perimeter guard of FIG. 1 and its interconnection to other devices in an industrial control system;
FIG. 8 is a detail view of the access control module of FIG. 7 highlighting the lockout and tagout tabs or hasps of the latching mechanism;
FIG. 9 is a diagram depicting a detail view of an electronic embodiment of the locking device for the door of the perimeter guard of FIG. 1 and its interconnection to other devices in an industrial control system;
FIG. 10 is a flowchart depicting the process of using the electronic trapped key apparatus;
FIG. II is a diagram depicting a detail view of a second electronic embodiment of the locking device for the door of the perimeter guard of FIG. 1 and its interconnection to other devices in an industrial control system;
FIG. 12 is a block diagram of an electronic trapped key apparatus;
FIG. 13 is a flowchart depicting the process of using a second embodiment of an electronic trapped key apparatus.

### DETAILED DESCRIPTION

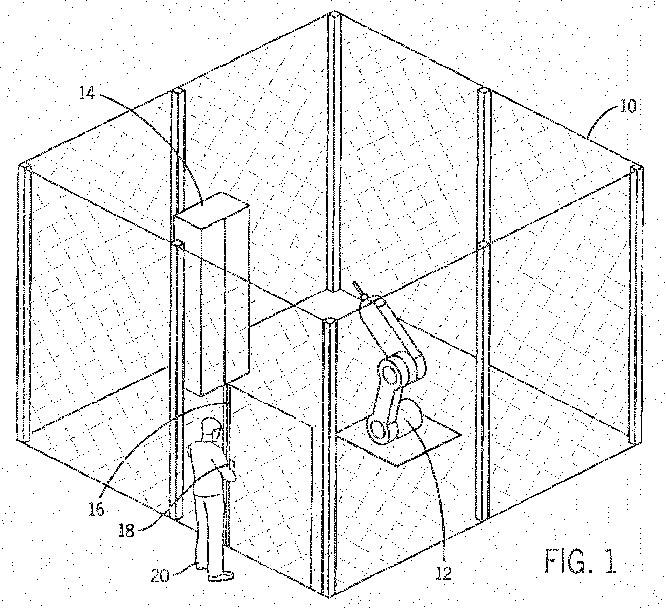

Turning now to the drawings, and referring first to Fig. 1, a perimeter enclosure 10 is shown enclosing an industrial robot 12 used in numerous industrial control applications. In this example a perimeter enclosure 10 is used to enshroud the extents of the potential movement of the industrial robot 12 in three dimensions so as to prevent injury to personnel and equipment when the industrial robot 12 is in operation. Perimeter enclosures 10 can be used in any number of applications to protect personnel from hazards associated with machines. In order to facilitate maintenance and some operations like teaching, an access door 16 is provided allowing personnel such as an operator 20 to enter the perimeter enclosure 10. Access to the perimeter enclosure 10 via the access door 16 is controlled by an access control module 18. The access control module 18 provides a mechanical bolt 45 for locking the access door 16. It may include other functions including the provision of inputs to the control system contained in control enclosure 14 as well as indicator lights reporting the state of the access control module 18 that are connected directly to the control system via input and output modules. Access control module 18 might also include an emergency stop button 49 that would disable power to industrial robot 12 before it would allow the mechanical bolt 45 locking access door 16 to operate and allow the door to open.

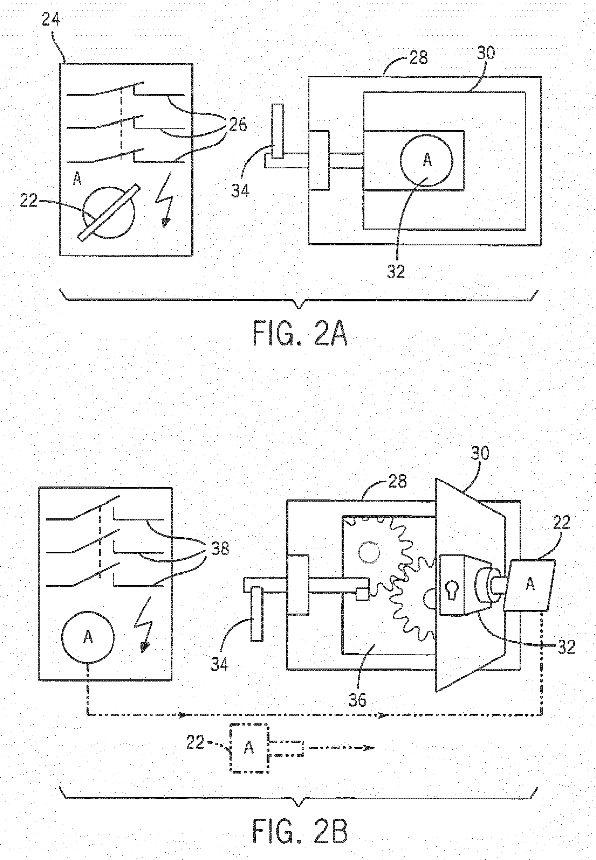

Referring to Fig. 2A and Fig. 2B a trap key sequence is illustrated. In Fig. 2A the trapped key 22 is placed in an electrical disconnect switch 24. The electrical disconnect switch 24 controls the power to machine 28 and is in the on or enabled state as indicated by electrical contacts 26, Trapped key 22 is required for access panel lock 32 to unlock access panel 30 on machine 28. However, trapped key 22 is captive in electrical disconnect 24 until the electrical disconnect 24 is set to the off or disabled position as indicated by electrical contacts 38. This disconnects the power to machine 28 and allows the removal of trapped key 22 from the electrical disconnect 24. An operator or maintenance person will then transport trapped key 22 to machine 28 and place it into access panel lock 32 on access panel 30. Unlocking access panel lock 32 will allow the operation of access panel lever 34 and the opening of access panel 30 on machine 28. This is an example application of a trapped key. Holding trapped key 22 in electrical disconnect 24 until the power to machine 28 is off prevents personnel from accessing machine 28 while it may be in operation. Other applications of trapped keys may involve additional steps in the sequence including additional trapped key devices in addition to the introduction of timed delays managed by the devices themselves in order to allow the environment to reach a state that is safe for personnel needing access.

Returning briefly to perimeter enclosure 10 in Fig. 1 and the access control module 18 on access door 16, in many applications it is desired to increase safety by the introduction of trapped keys. Fig, 3 is an illustration of a potential embodiment of a trapped key mechanism 40 to be adapted for use with access control module 18. In this illustration four trapped key operators 42 are shown two of which contain trapped keys 22. The number of trapped key operators 42 and associated trapped keys 22 vary depending upon the needs of the application. Trapped key mechanism 40 also includes a light emitting diode (LED) which indicates the state of the device.

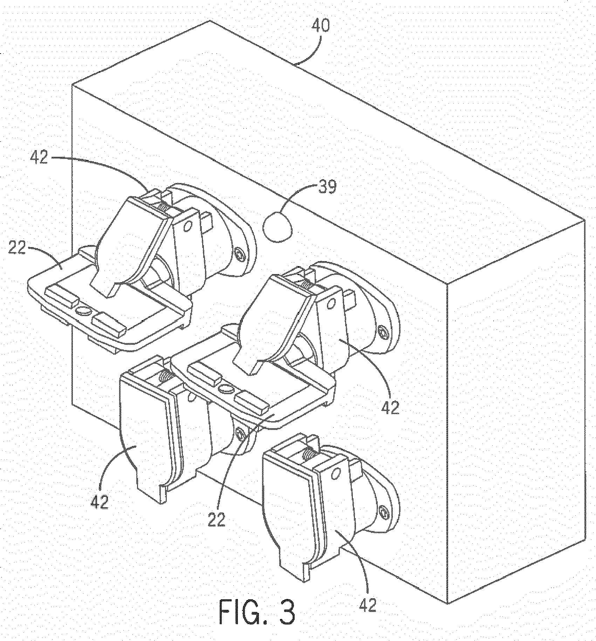

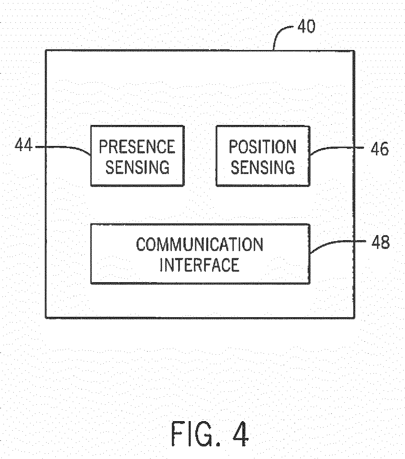

Referring to Fig. 4, in addition to the mechanical interlock function provided by each trapped key operator 42 and trapped keys 22 of Fig. 3, trapped key mechanism 40 is adapted to sense the presence 44 and the position 46 of trapped key 22 in each trapped key operator 42 and is also adapted to communicate this information to the access control module 18 and in some cases the industrial control system via a communications interface 48. Additionally, trapped key mechanism 40 may also provide the ability to mechanically prevent movement or extraction of trapped key 22 in trapped key operator 42 by a mechanical actuator. Communications interface 48 may also be employed to configure trapped key mechanism 40.

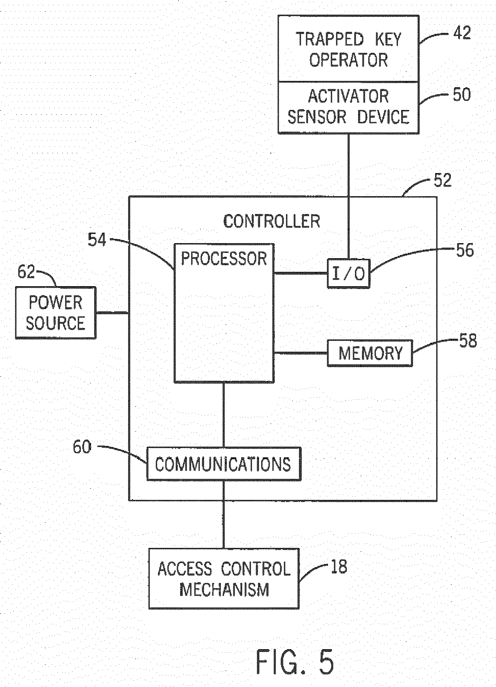

A block diagram of an embodiment of the electronic mechanism to facilitate the sensing and communications is illustrated in Fig. 5. Each trapped key operator 42 has an actuator sensor device 50 coupled to it that provides presence sensing 44 and position sensing 46 and the ability to prevent movement or extraction of trapped key 22 in trapped key operator 42. The actuator sensor device 50 is connected to a controller 52. Controller 52 is comprised of a processor 54, input\output (I/O) ports 56, memory 58, and a communications interface 60 connected to access control module 18. Controller 52 is powered by power source 62.

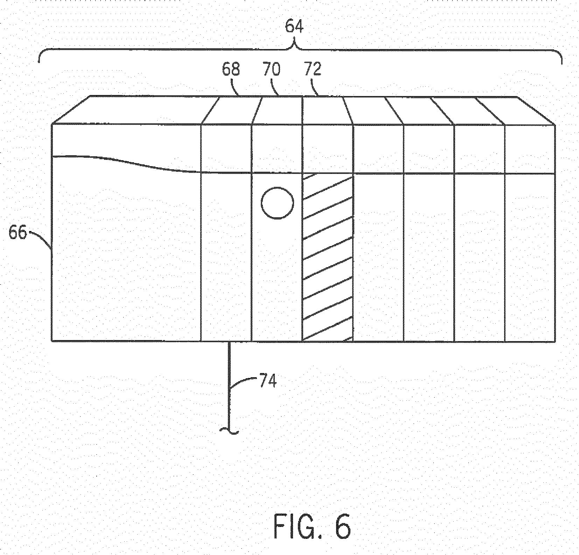

Fig. 6 shows a block diagram of a programmable logic controller (PLC) system 64. In this instance the system comprises a chassis 66 which comprises a power supply and the backplane into which various modules of the system plug in order to receive power and communicate with other devices in the chassis as well as the large industrial control system. Chassis 66 contains a network interface 68, a programmable logic controller module 70, and a safety controller module 72. The programmable logic controller 68 is primarily used to control various elements of an industrial control system. It communicates to other devices in the industrial control system via the network interface 68 which is connected to the network 74. The safety controller 72 is responsible for the safety aspects of the industrial control system in as specified by various industry standards such as IEC 61508, IEC 62061, ISO 13849-1, and IEC 61511. It should be understood that the word "safety" as used herein is used in the context of a set of common industry standards and practices related to functional safety. The absence of the word "safety" in relation to other devices in an industrial automation system does not imply that a device or system is unsafe, only that these elements are not intended to be in compliance with the common industry standards and practices related to the area of functional safety. An industrial control system may be comprised of a number of programmable logic controller 70 and safety controller 72 and associated devices as described.

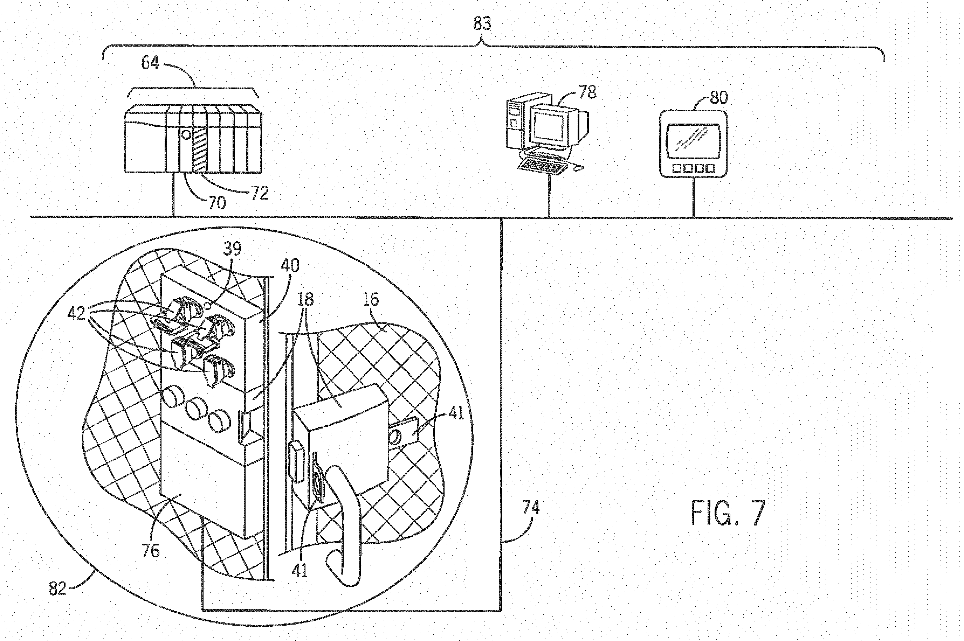

Turning to Fig. 7 an embodiment of an industrial control system using the trapped key mechanism 40 interfaced to the access control module 18 and a network interface 76 is illustrated. These devices are illustrated in a side-by-side configuration but other configurations are possible including the combination of these devices into a single device. As described in Fig. 1, in the current art the input and output of state information to and from access control module 18 is accomplished by physically connecting the device to the input and output modules of a programmable logic controller 70 with individual electrical connections. In this embodiment the interface to the programmable logic controller system 64 and specifically the safety controller 72 is via network interface 76 via network 74. Other components of an industrial control system 83 may be an industrial computer 78, and an industrial human machine interface terminal 80 all connected to network 74.

As shown in detail 82 of Fig. 7, the access control module 18 provides the mechanical lock for the access door 16 to the perimeter enclosure 10 as depicted in Fig. 1. The trapped key mechanism 40 interfaces to the access control module 18 via the communications interface 76 from the controller 52 as was shown in Fig. 5. The access control module 18 communicates to the industrial control system 83 and specifically the safety controller 72 via network interface 76 providing information such as trapped key presence, trapped key position, door state, lock state, fault state, emergency stop state, request to open, request to lock, and a fault log. The addition of the trapped key mechanism 40 and the network interface 76 provides and logs additional state information to the industrial control system in order to improve safety. It should be understood that the particular embodiment of trapped key mechanism 40, access control module 18, and communications interface 76 as illustrated in Fig. 7 is one way in which these devices and the functionality that they represent could be configured. Other embodiments where the functionality of trapped key mechanism 40, access control module 18, and communications interface 76 are housed within a single device are conceivable.

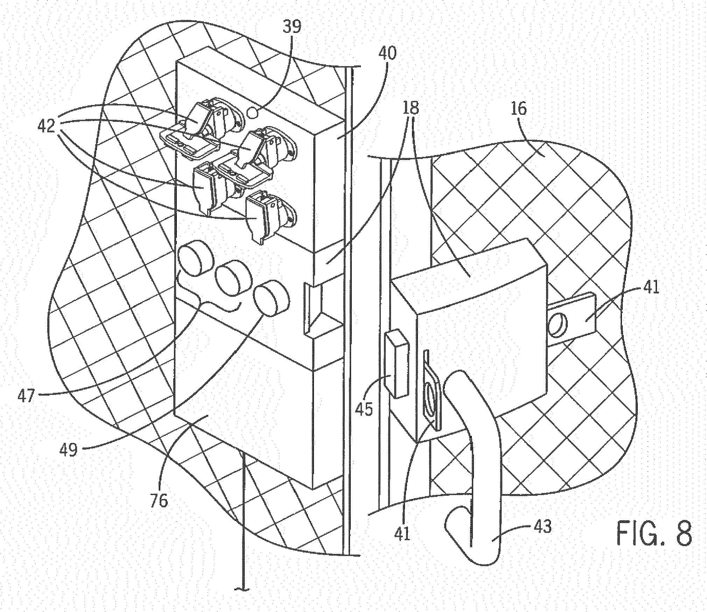

FIG. 8 is a detail view of the access control module 18 of FIG. 7 highlighting the lockout and tagout hasps or tabs of the latching mechanism. When all of the prerequisites for allowing access door 16 to be opened have been met operator 20 turns handle 43 of access control module 18 to disengage door bolt 45 allowing access door 16 to be opened. The movement of handle 43 to the open position actuates a mechanism contained within access control module 18 resulting in the exposure of two lockout tabs or hasps 41. The lockout tabs or hasps 41 allow operator 20 to place a common padlock into them and lock in place. This prevents handle 43 from being returned to the closed state. It is important to note that the trapped key functionality provided by the trapped key mechanism 40 may be used alone or in combination with lockout tabs or hasps 41 in order to provide a level of redundancy to the system and increasing safety.

In certain embodiments safety controller 72 may contain the logic necessary to determine the state of various pre-requisite permissions as communicated by access control module 18 via network interface 76. In other embodiments access control module 18 may contain the processing capability and logic necessary to monitor and determine the state of various pre-requisite permissions. As indicated, access control module 18 may contain buttons such as emergency stop 49 and user defined buttons 47. User defined buttons 74 may be used for functions like requesting a restart. The state of the emergency stop button 49, user-defined buttons 47, position of door bolt 45, position of handle 43, and position of door 16 are all communicated to safety controller 72 via network interface 76 and logged.

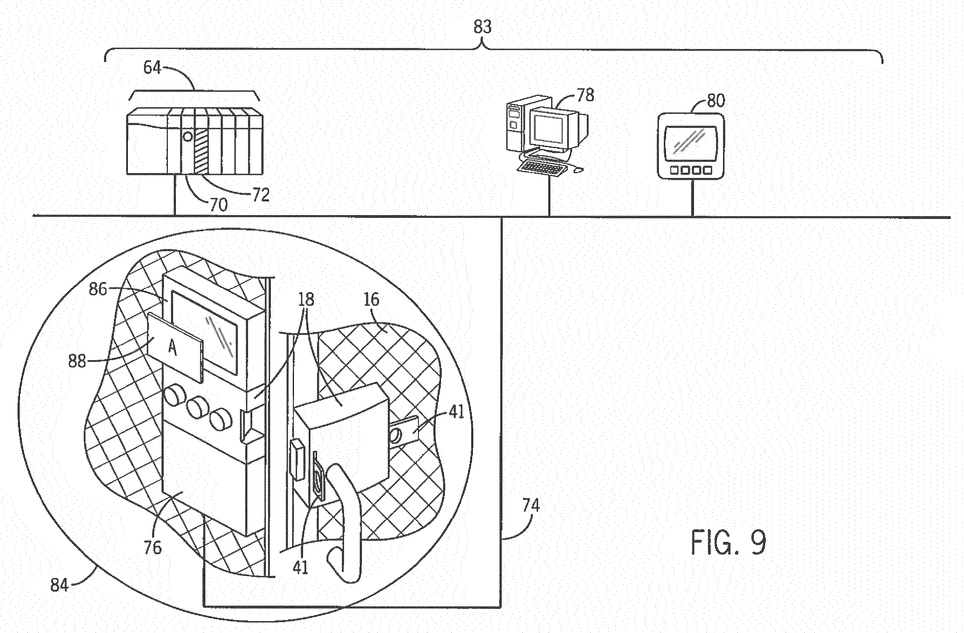

An alternate embodiment to that in Fig. 7 is shown in Fig. 9. In this application the trapped key mechanism 40 is replaced by an electronic trapped key mechanism 86. In this embodiment the electronic trapped key mechanism 86 is shown as a radio frequency identification (RFID) reader that reads RFID electronic trapped key 88. The function of the mechanical interlock is now provided by logic that is contained in computer programs that execute in the safety controller 72 or in an alternate embodiment in electronic trapped key mechanism 86 itself or in combination with an alternate embodiment of access control module 18. An interlock sensing system based upon electronic identification is described in U.S. Patent Application number US 2015/0061822 the entirety of which is hereby incorporated by reference.

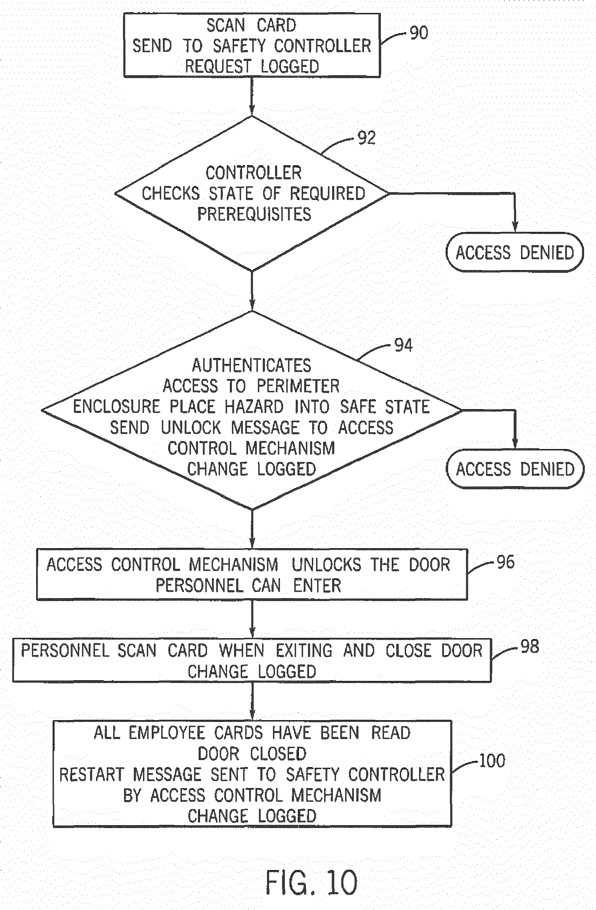

Referring to Fig. 10, a person requesting access to the perimeter enclosure 10 scans their RFID electronic trapped key 88 as indicated in Fig. 9. The safety controller 72 checks the state of all prerequisites 92. An example prerequisite may be that power has been disconnected from the machine as illustrated in the explanation of Fig. 2. The request is logged with identification of the requestor. Once the prerequisites are met the safety controller 72 authenticates access 94 to the perimeter enclosure 10 and the change is logged. The access control module 18 unlocks the door 96 allowing personnel 20 to enter perimeter enclosure 10. As personnel 20 exit perimeter enclosure 10 they scan 98 their RFID electronic trapped key 88 on electronic trapped key mechanism 86. All state changes and associated information are communicated to the safety controller 72 which manages all of the safety aspects of the access to perimeter enclosure 10 in much the same way as the mechanical embodiments described previously. Additionally, all state changes are logged with user identification so as to allow for the tracking and auditing of safety procedures and sequences. Once all personnel 20 have exited perimeter enclosure 10 a request to restart 100 the machine is initiated by operator 20 from access control module 18. In a manner similar to that of the mechanical case, safety controller 72 evaluates all of the necessary safety prerequisites and if they are all satisfied permits the machine to be re-started.

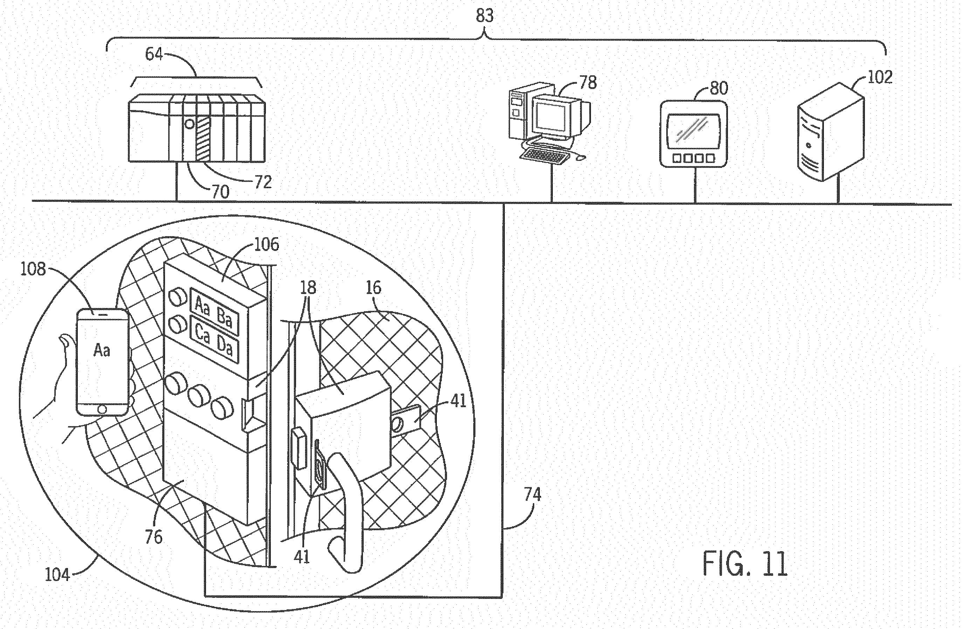

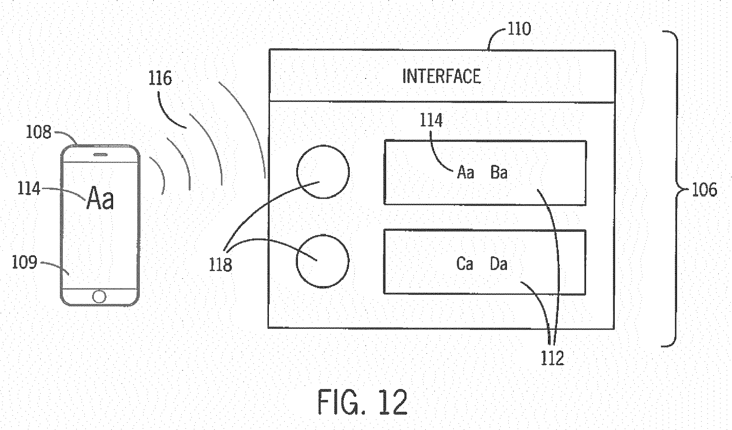

Turning to Fig. 11, a second embodiment of an electronic trapped mechanism is shown as electronic trapped key mechanism with display 106. The trapped key functionality may be provided by an application on electronic trapped key mobile device, electronic key device, or electronic card device 108. In the case where electronic trapped key device 108 is a mobile device the application on the device uniquely identifies it to the electronic trapped key mechanism with display 106. The electronic trapped key mechanism with display 106 is depicted detail in Fig. 12. Electronic trapped key mechanism with display 106 comprises a display device 112 capable of displaying the state of the electronic keys 114 in addition to other user defined information. Electronic trapped key mechanism with display 106 has an interface 110 to access control module 18. It also may include user defined buttons 118 that may communicate with safety controller 72 and programmable logic controller module 70. Electronic trapped key device 108 has a display 109 that is used to indicate the state of electronic trapped keys 114 where display objects representing keys may be green when a key is available or in a checked-in state and red for a checked-out state where the key is in use and thus trapped and cannot be used again until the requirements for it to be un-trapped are met. The display on electronic trapped key device 108 may also provide the operator with information regarding the next step in a safety sequence and the location for the performance of the step.

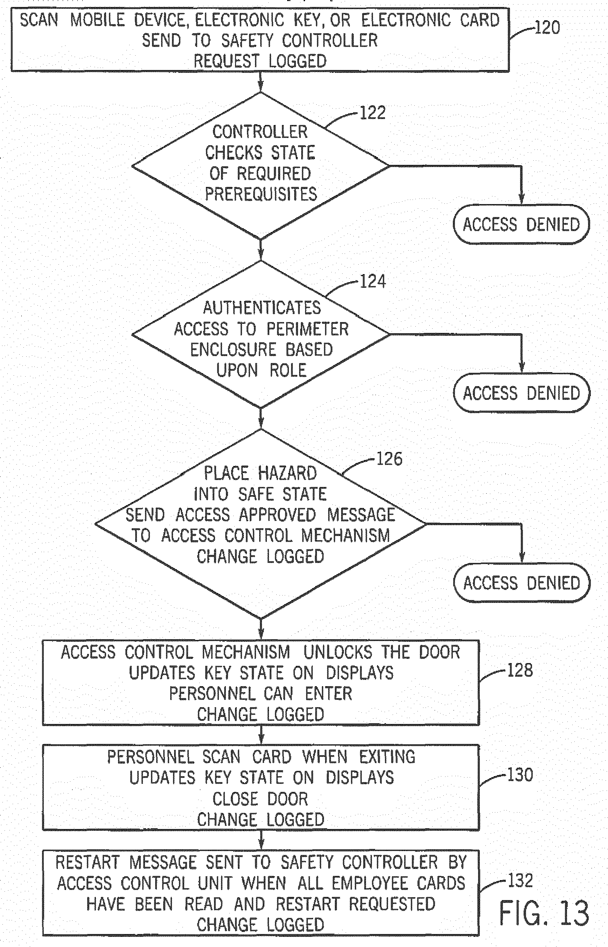

Referring to Fig. 13 an operator 20 requests access 120 to perimeter enclosure 10 by placing electronic trapped key device 108 in proximity to electronic trapped key mechanism with display 106. Electronic trapped key mechanism with display 106 sends the request to safety controller 72 via network interface 76 and the request is logged with identification of the requestor. The safety controller 72 checks the state of all prerequisites 122. Safety controller 72 authenticates 124 operator 20 and their role with industrial security application server 102 of Fig. 11. The role of the operator 20 will determine the type of access that they may or may not have to perimeter enclosure 10 and industrial robot 12 as well as other machines or devices contained within perimeter enclosure 10. Once the prerequisites are met and the role authenticated the safety controller 72 authenticates access 126 to the perimeter enclosure 10 and the change is logged with identification of the requestor. The access control module 18 unlocks the door 128 allowing personnel 20 to enter perimeter enclosure 10 and the request is logged with identification of the requestor. The state of the electronic trapped key device 108 is updated on the display of the Electronic trapped key mechanism with display 106 and on the Electronic trapped key device 108. In application the displayed key reference may be red in color to indicate that the electronic trapped key is in use and green in color to indicate that it is available. As personnel 20 exit perimeter enclosure 10 they scan 130 their electronic trapped key mobile device 108 on electronic trapped key mechanism with display 106 and the state of their electronic key is updated on the display and the request is logged with identification of the requestor. All state changes and associated information are communicated to the safety controller 72 which manages all of the safety aspects of the access to perimeter enclosure 10 in much the same way as the mechanical embodiments described previously. Once all personnel 20 have exited perimeter enclosure 10 a request to restart 132 the machine is initiated by operator 20 from access control module 18. In a manner similar to that of the mechanical case, safety controller 72 evaluates all of the necessary safety prerequisites and if they are all satisfied permits the machine to be re-started and the request is logged with identification of the requestor. It is conceivable that perimeter enclosure 10 may have more than one gate in this case the embodiments described in Fig. 9 and Fig. 11 would be employed for each gate and coordination of the gates would be managed by safety controller 72.

While only certain features of the invention have been illustrated and described herein, many modifications and changes will occur to those skilled in the art. It is, therefore, to be understood that the appended claims are intended to cover all such modifications and changes as fall within the true spirit of the invention.

### The following is a list of further preferred embodiments of the invention:

Embodiment 1. A trapped key interlock system comprising:
   a trapped key interface device;
   an access control module operably connected to the trapped key interface device the access control module having an electronic control for permitting the actuation of an open or close state of a latching mechanism;
   a communication interface operably connected to the access control module and the control system; and
   the control system operably connected to an industrial automation device for controlling the operation of a machine, the control system adapted to authenticate an access request from a trapped key through the communication interface and log the state changes.
Embodiment 2. The system of embodiment 1, wherein the trapped key interface device is an electromechanical device the electromechanical device adapted to receive at least one removably connected mechanical key and an electromechanical apparatus actuated by the mechanical key and providing a visual indicator of the state of the device based on presence of the key.
Embodiment 3. The system of embodiment 2, wherein the electromechanical apparatus is adapted to sense the presence of a key and determine a state change, the apparatus adapted to communicate with a remote control system to notify the control system of such a state change.
Embodiment 4. The system of embodiment 2, wherein the electromechanical apparatus is adapted to sense the position of a key and determine a state change, the apparatus adapted to communicate with a remote control system to notify the control system of such a state change.
Embodiment 5. The system of embodiment 2, wherein the electromechanical apparatus is adapted to mechanically restrain keys based upon state information from the control system.
Embodiment 6. The system of embodiment 1, wherein the access control module has at least one light emitting diode indicating trapped key state.
Embodiment 7. The system of embodiment 1, wherein the trapped key interface device is an electronic device capable of reading radio frequency identification tags the device having a sensor to sense the presence of the key and determine a state change, the device adapted to communicate with a remote control system to notify the control system of such a state change.
Embodiment 8. The system of embodiment 7, wherein the trapped key is comprised of a radio frequency identification tag.
Embodiment 9. The system of embodiment 7, wherein an access request from a trapped key is authenticated with the control system.
Embodiment 10. The system of embodiment 7, wherein an access request from a trapped key is logged with requestor identification.
Embodiment 11. The system of embodiment 7, wherein all state changes are logged in the control system.
Embodiment 12 The system of embodiment 1, wherein the trapped key interface device is an electronic device capable of detecting and communicating with an electronic trapped key.
Embodiment 13. The system of embodiment 12, wherein the trapped key interface device is an electronic device adapted with a graphic display the device having a sensor to sense the presence of the key and determine a state change, the device adapted to communicate with a remote control system to notify the control system of such a state change.
Embodiment 14. The system of embodiment 12, wherein the graphic display of the electronic trapped key interface device is adapted to graphically indicate trapped key state.
Embodiment 15. The system of embodiment 12, wherein the graphic display of the electronic trapped key interface device is adapted to indicate safety sequence steps.
Embodiment 16. The system of embodiment 12, wherein the electronic trapped key may comprise an electronic trapped key mobile device, an electronic key device, or an electronic card device.
Embodiment 17. The system of embodiment 12, wherein all state changes are logged in the control system.
Embodiment 18. The system of embodiment 1, wherein the trapped key interface device, access control module, and communication interface are contained in a single housing.
Embodiment 19. The system of embodiment 1, wherein the access control module contains an emergency stop operator.
Embodiment 20. The system of embodiment 1, wherein the access control module contains at least two user defined button operators.
Embodiment 21. The system of embodiment 1, wherein the latching mechanism of the access control module has lockout hasps adapted to prevent movement of the access control module handle operator in the open state.
Embodiment 22. The trapped key interlock system of embodiment 1, wherein the latching mechanism has one or more hasps extending from the access control module and sized for receiving a lock, the lock and keys providing redundant locking based on at least two separate processes wherein a first process is provided by a trapped key interface device and a second process is provided by the hasps on the latching mechanism.
Embodiment 23. The system of embodiment 1, wherein the trapped key device and the access control lockout hasps may be used in combination.
Embodiment 24. The system of embodiment 1, wherein the access control module may maintain and manage state and permissions for the trapped key interlock system.
Embodiment 25. A trapped key interlock system comprising:
   a trapped key interface device having at least one removably connected key, the device having a sensor to sense the presence of the key and determine a state change, the device adapted to communicate with a remote control system to notify the control system of such a state change;
   an access control module operably connected to the trapped key interface device, the access control module having an electronic control for permitting the actuation of an open or close state of a latching mechanism and providing a visual indicator of the state of the device based on presence of the key;
   a communication interface operably connected to the access control module and the control system; and
   the control system operably connected to an industrial automation device for controlling the operation of a machine, the control system adapted to authenticate an access request from a trapped key through the communication interface and log the state changes.

## Claims

1. A trapped key interlock system comprising:
a trapped key interface device;
an access control module operably connected to the trapped key interface device, the access control module having an electronic control for permitting the actuation of an open or close state of a latching mechanism;
a communication interface operably connected to the access control module and the control system; and
the control system operably connected to an industrial automation device for controlling the operation of a machine, the control system adapted to authenticate an access request from a trapped key through the communication interface and log the state changes.

2. The system of claim 1, wherein the trapped key interface device is an electromechanical device the electromechanical device adapted to receive at least one removably connected mechanical key and an electromechanical apparatus actuated by the mechanical key and providing a visual indicator of the state of the device based on presence of the key.

3. The system of claim 2, wherein the electromechanical apparatus is adapted to sense the presence of a key and determine a state change, the apparatus adapted to communicate with a remote control system to notify the control system of such a state change.

4. The system of claim 2, wherein the electromechanical apparatus is adapted to sense the position of a key and determine a state change, the apparatus adapted to communicate with a remote control system to notify the control system of such a state change.

5. The system of claim 2, wherein the electromechanical apparatus is adapted to mechanically restrain keys based upon state information from the control system.

6. The system of one of claims 1 to 5, wherein the access control module has at least one light emitting diode indicating trapped key state.

7. The system of claim 1, wherein the trapped key interface device is an electronic device capable of reading radio frequency identification tags the device having a sensor to sense the presence of the key and determine a state change, the device adapted to communicate with a remote control system to notify the control system of such a state change.

8. The system of claim 7, wherein:
the trapped key is comprised of a radio frequency identification tag; and/or
an access request from a trapped key is authenticated with the control system; and/or
an access request from a trapped key is logged with requestor identification; and/or
all state changes are logged in the control system.

9. The system of claim 1, wherein the trapped key interface device is an electronic device capable of detecting and communicating with an electronic trapped key.

10. The system of claim 9, wherein the trapped key interface device is an electronic device adapted with a graphic display the device having a sensor to sense the presence of the key and determine a state change, the device adapted to communicate with a remote control system to notify the control system of such a state change.

11. The system of claim 9, wherein the graphic display of the electronic trapped key interface device is adapted to graphically indicate trapped key state; and/or
the graphic display of the electronic trapped key interface device is adapted to indicate safety sequence steps.

12. The system of claim 9, wherein:
the electronic trapped key may comprise an electronic trapped key mobile device, an electronic key device, or an electronic card device; and/or
all state changes are logged in the control system.

13. The system of one of claims 1 to 12, wherein:
the trapped key interface device, access control module, and communication interface are contained in a single housing; and/or
the access control module contains an emergency stop operator; and/or
the access control module contains at least two user defined button operators; and/or
the access control module may maintain and manage state and permissions for the trapped key interlock system.

14. The system of one of claims 1 to 13, wherein:
the latching mechanism of the access control module has lockout hasps adapted to prevent movement of the access control module handle operator in the open state; or
the latching mechanism has one or more hasps extending from the access control module and sized for receiving a lock, the lock and keys providing redundant locking based on at least two separate processes wherein a first process is provided by a trapped key interface device and a second process is provided by the hasps on the latching mechanism; or
the trapped key device and the access control lockout hasps may be used in combination.

15. The trapped key interlock system of claim 1, wherein:
the trapped key interface device has at least one removably connected key;
the device has a sensor to sense the presence of the key and determine a state change;
the device adapted to communicate with a remote control system to notify the control system of such a state change; and
the access control module is configured to provide a visual indicator of the state of the device based on presence of the key.
